Europäisches Patentamt

European Patent Office

Office européen des brevets

(11) Publication number: **0 094 782**
A2

# EUROPEAN PATENT APPLICATION

(21) Application number: 83302636.2

(22) Date of filing: 10.05.83

(51) Int. Cl.³: **B 29 D 27/02**

(30) Priority: 14.05.82 US 378114

(43) Date of publication of application:
23.11.83 Bulletin 83/47

(84) Designated Contracting States:
BE DE FR GB IT NL SE

(71) Applicant: INTERNATIONAL PACKAGING SYSTEMS, INC.
One Brook Street
Norwalk Connecticut 06851(US)

(72) Inventor: O'Malley, Michael P.
22 Paterson Avenue
Stratford Connecticut 06497(US)

(74) Representative: Colgan, Stephen James et al,
CARPMAELS & RANSFORD 43 Bloomsbury Square
London WC1A 2RA.(GB)

(54) Improved mixing arrangement for plural component gun.

(57) A gun for mixing and dispensing plural component materials, for example, polyurethane foam, is provided with a mixing chamber for two coreactive streams of chemical materials which, because of the angled disposition of the feed ducts for the two chemicals, results in a more initmate mixing of the chemicals without deleterious result.

FIG. 1

## Improved Mixing Arrangement For Plural Component Gun

This invention relates to guns for mixing and dispensing plural component plastic materials, for example, polyurethane foam and particularly to an improved arrangement for intimate mixing of two chemical compositions used to form polyurethane foam.

One particular problem involved in mixing polyurethane foams is that the separate liquid chemical ingredients tend to react relatively rapidly and begin to foam within various passageways of the dispensing gun head to adversely effect the quality of the foam or render the gun unusable until it is disassembled and cleaned with a solvent. To remedy this situation, some prior art dispensing apparatus provide disposable mixing chambers while others utilize various means of purging the gun head, for example, by using air, cleaning solvents, etc. and other purging devices.

One method of mixing and dispensing polyurethane foam is by providing a dispensing gun where two streams of the chemical ingredients impinge within a mixing chamber from diametrically opposed ducts. Typical of this type of foam dispensing gun are those shown in U.S. Patents Nos. 2,890,836, 3,263,928, 3,666,337, 4,133,483 and 4,252,255. While the method of mixing the chemical ingredients in these prior art dispensing guns provides an effective mixing method, the disposition of the two feed port orifices directly opposite from one another creates a problem in that the ingredients from one feed duct can flow directly into the opposed feed duct which results in partial foaming in the feed duct which can then harden thereby necessitating cleaning of the feed duct orifices. This results in down time to a user of the equipment.

The present invention overcomes the difficulties and drawbacks of the prior art plural component dispensing guns by positioning the feed ducts of the chemical ingredients at an angle so that the impingement of the chemicals within the mixing chamber is so oriented so as to preclude flow of the chemicals from one feed duct into the opposed feed duct.

It is therefore an object of this invention to provide a plural component dispensing gun having provision to eliminate the possibility of foaming and hardening of the chemical materials within a feed duct orifice.

It is a further object of the present invention to provide a plural component dispensing gun which overcomes the drawbacks and disadvantages of prior art guns of the same type.

Other objects and advantages of the present invention will become apparent from the following detailed description.

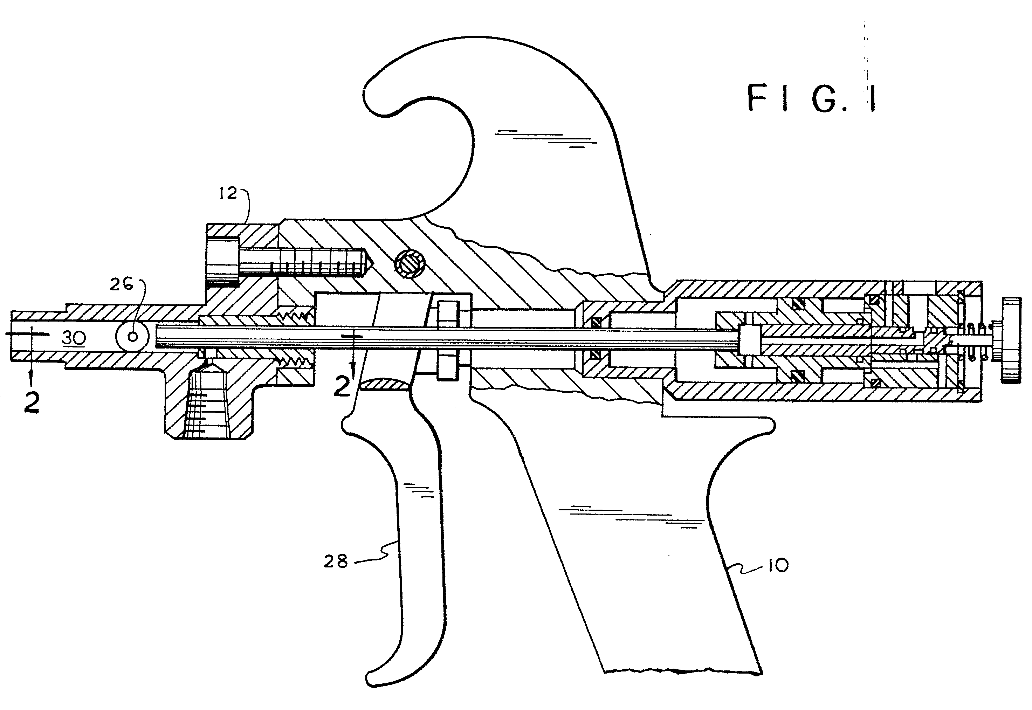

Fig. 1 is a side elevational view of the gun of the present invention, partly in vertical longitudinal section; and

Fig. 2 is a sectional view taken along line 2-2 of Fig. 1.

Referring to the drawings, a dual component dispensing gun 10 is shown having a gun head 12. The valving details, controls, chemical components supply sources and the like, have been omitted for brevity because, in this preferred embodiment, they may be identical to those described in the afore-mentioned U.S. Patent No. 3,366,337, which disclosure is incorporated herein by reference.

Briefly, the liquid chemical reactant components are supplied through inlet orifices 14 and 16 into chambers 18 and 20, respectively. The chambers 18 and 20 communicate with opposed ducts 22 and 24 and the flow of each liquid chemical is controlled by valve means, not shown.

As is known in the art, when it is desired to dispense polyurethane foam, the two valve means which are normally closed are opened substantially simultaneously by movement of gun trigger 28 by the operator of the device. When this occurs the chemical reactants flow into ducts 22, 24 under pressure and out impingement orifices 26 and 28, respectively, into a cylindrically shaped mixing chamber 30 where they are thoroughly mixed to begin the reaction to form the foam.

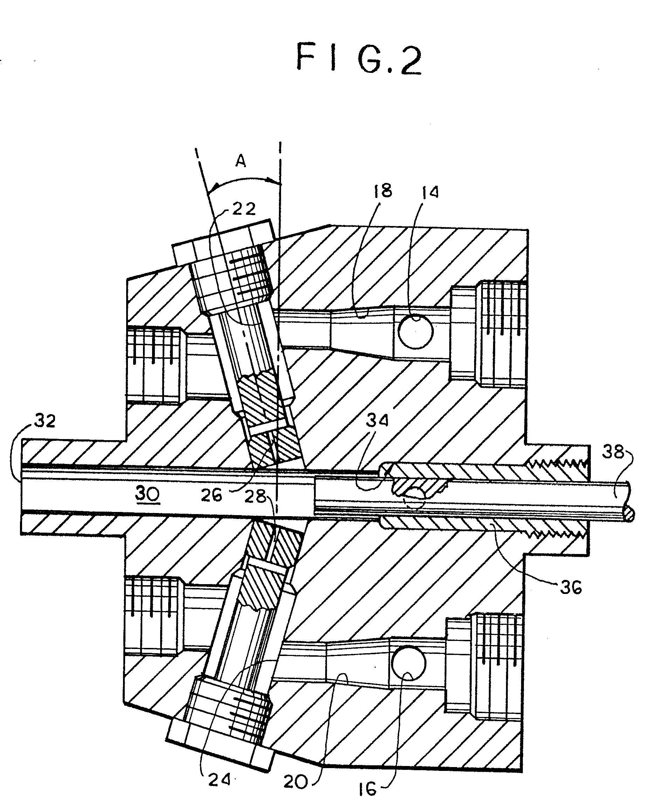

According to the present invention the impinging orifices 26 and 28 and the respective feed ducts 22 and 24 are oriented at an angle with respect to a plane passing through each orifice 26 and normal to the orifice as shown in Fig. 2. Preferably this angle, shown at A in Fig. 2, is between 5° and 30° and preferably within the range of about 15°. As a result of the orientation of the impingement orifices shown in Fig. 2, when the two separate chemical ingredients impinge within the mixing chamber 30 under pressure the flow of material is such as to avoid the likelihood of flowing into the opposite orifice and results in effective interaction within the mixing chamber 30. After mixing and reacting against the forward surface of purging rod 38, the urethane mixture is ejected from the discharge outlet 32.

The rearward end of the gun head 12 is provided with a bore 34 actively aligned with the mixing chamber 30 within which is disposed a sleeve 36 of teflon or other low friction material. Sleeve 36 forms a bearing support for a purging rod 38 which operates to purge the mixing chamber 30 of any residual foam material after use of the foaming operation. This type of purging action can be as disclosed in any one of the prior patents referenced herein such as U.S. Patents Nos. 4,133,483, 3,366,337 or 4,133,483 and forms no part of the present invention.

It is thus seen that the present invention provides an improved interaction of the chemical components of a material such as polyurethane foam which results in better mixing efficiency of the two components in a mixing chamber and avoids some of the problems of prior art devices wherein the chemical from one supply duct flows into the other supply duct where it can solidify and harden requiring disassembly of the gun and cleaning of the orifices. The mixing is assisted by the orientation of the discharge orifices as the flow direction of material is directed so as to impinge on the flow of material from an angularly offset opposed orifice against the forward surface of a purging rod. This results in a more violent and agitated intermixing of the chemical reactants for a more efficient application of foam.

Claims:

1. A plural component mixing and dispensing gun comprising a gun body, a head secured to said body, said head having a mixing chamber with a discharge outlet at its forward end, opposed inlet orifices communicating with said chamber and means for selectively and intermittently feeding streams of reactant liquids through said orifices into said chamber so that the liquids form a reactive mixture which is discharged through said discharge outlet, said reactive mixture being one which solidifies rapidly after reactive mixtures of said liquids are mixed, the improvement comprising orienting the discharge outlets of said inlet orifices to direct a stream of reactive chemicals at an angle with respect to a plane passing through said opposed inlet orifices thereby to preclude the flow of a reactant chemical from one inlet orifice to the other inlet orifice.

2. A gun as defined in claim 1 wherein said inlet orifices are offset at an angle of between 5° and 30°.

3. A gun as defined in claim 1 wherein said inlet orifices are offset at an angle of about 15°.

4. A gun as defined in claim 1 including a purge rod disposed rearwardly of said mixing chamber and wherein said reactant chemicals are directed to impinge and intermix within said mixing chamber in an area adjacent to the forward surface of said purge rod thereby to increase the mixing efficiency of said impinging reactive chemicals.

F I G. 1

# FIG.2